# EUROPÄISCHE PATENTANMELDUNG

(11) **EP 4 310 031 A1**
(43) Veröffentlichungstag der Anmeldung: **24.01.2024**
(21) Anmeldenummer: 23185585.9
(22) Anmeldetag: 14.07.2023
(51) Int. Cl.: B65G 43/08, B65G 47/84

(54) **BEHÄLTERZUFÜHRSYSTEM ZUM TRANSPORT EINES BEHÄLTERS**

(30) Priorität: 19.07.2022 EP 22185615
(71) Anmelder: Ferrum Packaging AG, 5503 Schafisheim (CH)
(72) Erfinder: Gasser, Cyrill, 5600 Lenzburg (CH)
(74) Vertreter: IPS Irsch AG

(57) **Zusammenfassung**

Die Erfindung betrifft ein Behälterzuführsystem (1) zum Transport eines Behälters (100) entlang einer Transportstrecke (S) von einer Behälterquelle (9) zu einem Behälterempfänger (1000), umfassend eine Bewegungsvorrichtung (19) zur Aufnahme und zum Transport des Behälters (100) entlang der Transportstrecke (S); und ein sich mit seiner Länge (L) entlang der Transportstrecke (S) erstreckendes Transportband (6), auf welchem Transportband (6) der Behälter (100) durch die Bewegungsvorrichtung (19) entlang der Transportstrecke (S) bewegbar ist; und einen zur Erkennung des Behälters (100) an dem Transportband (6) angeordneten Sensor (4). Dabei erstreckt sich der Sensor (4) derart entlang einer senkrecht zu der Länge (L) des Transportbandes (6) verlaufenden Breite (B) des Transportbandes (6), dass der sich entlang der Transportstrecke (6) bewegende Behälter (100) durch den Sensor (4) erkennbar ist.

## Beschreibung

Die Erfindung betrifft ein Behälterzuführsystem zum Transport eines Behälters, eine Verarbeitungsvorrichtung zur Verarbeitung eines Behälters und einen Verschliesser zum Verschliessen eines Behälters. Die Erfindung betrifft weiter ein Verfahren zum Verschliessen eines Behälters und ein Verfahren zum Transport eines Behälters mit einem erfindungsgemässen Behälterzuführsystem.

Bei der Abfüllung von Getränkedosen oder Lebensmitteldosen durchlaufen die Dosen nach der Befüllung mit dem Getränk oder dem Lebensmittel einen Dosenverschliesser, wobei die befüllten Dosenkörper über einen Zuführweg einlaufen und über einen weiteren Zuführweg Dosendeckel einlaufen. Der Dosenverschliesser weist üblicherweise mehrere karussellförmig angeordnete, gleichartige Stationen auf, in denen jeweils eine Dose mit einem Dosendeckel verschlossen wird. Die Dosendeckel werden dabei auf die Dosenkörper geführt und mit einer Halteplatte eines Falzkopfes auf dem Dosenkörper gehalten. Dieses Halten dient auch der Fixierung der Dosen gegen ein Ausbrechen aus der von den Dosen in dem Dosenverschliesser durchlaufenen Kreisbahn aufgrund der Zentrifugalkraft. In dem Dosenverschliesser werden dabei die Dosenkörper mit dem Dosendeckel randseitig über eine Falzrolle gefalzt und somit verschlossen. In der Regel wird die Dose mit dem Dosendeckel dabei mittels des Falzkopfes zusätzlich um die eigene Symmetrieachse rotiert. Zur Rotation sind die Falzrollen und Falzköpfe an einer jeweiligen Falzwelle angeordnet.

Ein gattungsgemässer Dosenverschliesser ist in der DE 749636 und der DE4234115 A1 beschrieben. Der Dosenverschliesser umfasst eine Einspannvorrichtung zur Aufnahme einer zu verschliessenden Dose. Im Betriebszustand ist die zu verschliessende Dose in die Einspannvorrichtung eingebracht und durch diese in axialer und radialer Richtung gesichert. Ebenso ist ein Dosendeckel über der Dosenöffnung der zu verschliessenden Dose zentriert eingebracht. Die Dose weist im Bereich der Dosenöffnung einen umlaufenden Dosenflansch und der Dosendeckel einen umlaufenden Dosendeckelflansch auf. Zum Verschliessen der Dosenöffnung durch den Dosendeckel umfasst der Dosenverschliesser zusätzlich zwei um jeweils eine Achse drehbar gelagerte Falzrollen, die den Dosenflansch und den Dosendeckelflansch mittels einer im wesentlichen radial wirkenden Kraft miteinander verpressen, wobei die Verpressung durch ein kontinuierliches Abrollen in Umfangsrichtung entlang dem Umfang der Dosenöffnung erfolgt.

Ein weiterer Dosenverschliesser ist aus der GB 2098899 A bekannt. Der Dosenverschliesser umfasst eine Einspannvorrichtung zur Aufnahme der zu verschliessenden Dose und eine Falzrolle. Im Betriebszustand ist die zu verschliessende Dose in die Einspannvorrichtung eingebracht und durch diese in axialer und radialer Richtung gesichert. Ebenso ist ein Dosendeckel über der Dosenöffnung der zu verschliessenden Dose zentriert eingebracht. Die Dose weist im Bereich der Dosenöffnung des Dosenkörpers einen umlaufenden Dosenflansch und der Dosendeckel einen umlaufenden Dosendeckelflansch auf.

Vor dem eigentlichen Falzprozess werden Deckel und Dose an einem definierten Punkt (dem X-Punkt) vereint. Das Zuführen der Deckel erfolgt rotativ auf einem Begasungsrotor, auf welchem die Deckel aufliegen. Die Dosen werden über eine Dosenzuführung linear zum X-Punkt geführt. Damit rechtzeitig ein Deckel für die Dose ausgelöst werden kann, benötigt es ein Erkennungssystem, welches die Dosen auf der Dosenzuführung erkennt.

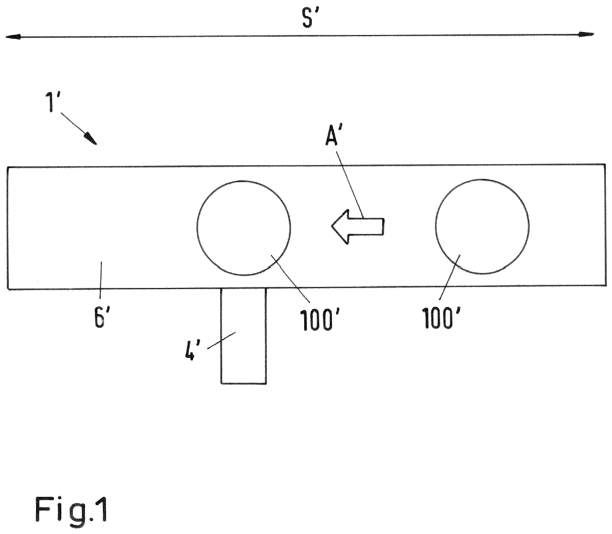

Zum besseren Verständnis der vorliegenden Erfindung wird im Folgenden ein aus dem Stand der Technik bekanntes Behälterzuführsystem anhand der Fig. 1 beschrieben.

Zur besseren Unterscheidung des bekannten Standes der Technik von der vorliegenden Erfindung werden im Rahmen dieser Anmeldung Bezugszeichen zu Merkmalen bekannter Vorrichtungen mit einem Hochkomma (in Fig. 1) versehen, während Merkmale zu erfindungsgemässen Vorrichtungen oder deren Bestandteilen kein Hochkomma tragen.

Fig. 1 zeigt ein bekanntes Behälterzuführsystem 1' zum Transport eines Behälters 100' entlang einer Transportstrecke S' von einer Behälterquelle zu einem Behälterempfänger.

Dabei umfasst das Behälterzuführsystem 1' eine Bewegungsvorrichtung (nicht dargestellt) zur Aufnahme und zum Transport des Behälters 100' entlang der Transportstrecke S' in Richtung A'. Die Bewegungsvorrichtung ist im Bereich der Dosenverschliesser üblicherweise eine an einer Kette befestigter Mitnehmer.

Ausserdem umfasst das Behälterzuführsystem 1' ein sich entlang der Transportstrecke S' erstreckendes Transportband 6', auf welchem Transportband 6' der Behälter 100' durch die Mitnehmer gleitend entlang der Transportstrecke S' bewegt wird.

Zur Erkennung des Behälters 100' umfasst das Behälterzuführsystem 1' einen seitlich neben dem Transportband 6' angeordneten Sensor 4', welcher als induktiver Sensor ausgestaltet ist und seitlich befestigt ist.

Der Sensor 4' erkennt den sich in Richtung A' vorbeibewegenden Behälter 100' und gibt ein Steuersignal aus, welches dafür sorgt, dass ein Deckel für den Behälter 100' ausgelöst wird.

Die Behälter 100' laufen jedoch mittig auf dem Transportband 6'. Dies hat zur Folge, dass bei einer Umstellung des Behälterformates (anderer Durchmesser) jeweils der Sensor 4' zu- oder weggestellt werden muss.

Aufgabe der Erfindung ist es daher, ein Behälterzuführsystem bereitzustellen, welches die aus dem Stand der Technik bekannten nachteiligen Wirkungen vermeidet. Insbesondere sollen ein Behälterzuführsystem bereitgestellt werden, welches einfach ausgestaltet ist und bei einem Formatwechsel nicht angepasst werden muss.

Die Aufgabe wird durch ein erfindungsgemässes Behälterzuführsystem, eine erfindungsgemässe Verarbeitungsvorrichtung, einen erfindungsgemässen Verschliesser und durch die erfindungsgemässen Verfahren gelöst.

Erfindungsgemäss wird ein Behälterzuführsystem zum Transport eines Behälters entlang einer Transportstrecke von einer Behälterquelle zu einem Behälterempfänger vorgeschlagen.

Das Behälterzuführsystem umfasst eine Bewegungsvorrichtung zur Aufnahme und zum Transport des Behälters entlang der Transportstrecke und ein sich mit seiner Länge entlang der Transportstrecke erstreckendes Transportband, auf welchem Transportband der Behälter durch die Bewegungsvorrichtung entlang der Transportstrecke bewegbar ist (die Länge erstreckt sich also insbesondere entlang einer Bewegungsrichtung des Behälters im Betriebszustand). Zur Erkennung des Behälters umfasst das Behälterzuführsystem ausserdem einen an dem Transportband angeordneten Sensor.

Hierbei erstreckt sich der Sensor derart entlang (insbesondere über) eine senkrecht zu der Länge des Transportbandes verlaufenden Breite des Transportbandes, dass der sich (in einem Betriebszustand) entlang der Transportstrecke bewegende Behälter durch den Sensor erkennbar ist.

Da der Sensor somit nicht seitlich neben dem Transportband angeordnet ist, sondern sich über die Breite des Transportbandes erstreckt, muss der Sensor bei einem Formatwechsel zu einem anderen Behälterdurchmesser seine Position nicht ändern, da ein Abstand zu dem sich vorbeibewegenden Behälter bei jedem Behälterdurchmesser gleich ist.

Dabei kann der Sensor in, unter oder über dem Transportband angeordnet sein. In bedeutet dabei, dass der Sensor in ein Material des Transportbandes eingebracht ist, beziehungsweise in einem Innenraum des Transportbandes angeordnet ist.

Bevorzugt ist der Sensor jedoch in oder unter dem Transportband angeordnet. So bleibt der Abstand zu einem sich vorbeibewegenden Behälter auch bei einem Formatwechsel auf eine andere Höhe gleich und eine Positionsänderung des Sensors kann vermieden werden.

Insbesondere kann der Sensor bezogen auf die Breite des Transportbandes mittig beziehungsweise in der Mitte des Transportbandes angeordnet sein.

In der Praxis kann der Sensor Teil eines Erkennungssystems sein beziehungsweise mit einer Steuereinrichtung verbunden sein, sodass ein Signal, welches durch den sich am Sensor vorbeibewegenden Behälter erzeugt wird, in ein Steuersignal umgewandelt werden kann, welches die Deckelzufuhr steuert und ein Bereitstellen des Deckels ermöglicht.

Besonders bevorzugt ist der Sensor ein induktiver Sensor, welcher den Behälter erkennt, indem eine Änderung der Induktivität durch den sich vorbeibewegenden Behälter gemessen wird.

Hierfür umfasst der Sensor vorzugsweise eine Spule, welche ein Magnetfeld erzeugt. Durch den sich vorbei bewegenden Behälter ändert sich das Magnetfeld. Durch dieses Messprinzip wird eine berührungslose Behältererkennung ermöglicht.

Alternativ könnte auch ein optischer Sensor verwendet werden, welcher über dem Transportband oder an einem optisch transparenten Abschnitt des Transportbandes angeordnet ist. Alternativ könnte das Transportband auch optisch transparent sein, sodass eine Behältererkennung durch das Transportband hindurch (also von unter dem Transportband) ermöglicht wird.

Ausserdem kann unter anderem auch ein anderer strahlungsbasierter Sensor verwendet werden und es kann eine Vielzahl von (verschiedenen) Sensoren verwendet werden. Eine Vielzahl von Sensoren ermöglicht eine Kontrolle der Behältererkennung.

Prinzipiell kann das Transportband ein Förderband sein, sodass der Behälter durch eine Bewegung des Förderbandes entlang der Transportstrecke bewegbar ist. Ein Förderband kann somit gleichzeitig auch als Bewegungsvorrichtung fungieren, jedoch kann auch noch eine zusätzliche Bewegungsvorrichtung verwendet werden.

Vorzugsweise ist das Transportband jedoch ein Gleitband, welches insbesondere unbeweglich also stationär ist, sodass der Behälter gleitend über eine Gleitfläche des Gleitbandes entlang der Transportstrecke bewegbar ist. Bei einem Gleitband wird eine separate Bewegungsvorrichtung benötigt, welche den Behälter über das Gleitband führt.

Der Behälter bewegt sich also gleitend über eine Oberfläche des Gleitbandes. «Gleitend» bedeutet insbesondere, dass der Behälter, vorzugsweise mit konstanter Geschwindigkeit, entlang Oberfläche des Gleitbandes rutscht. Hierbei erfolgt also eine Kontaktierung einer Oberfläche des Behälters und der Oberfläche des Gleitbandes.

Besonders bevorzugt umfasst die Bewegungsvorrichtung einen Mitnehmer zur Aufnahme und zum Transport des Behälters sowie ein Zugelement, welches derart mit dem Mitnehmer verbunden ist, dass der Mitnehmer durch eine Bewegung des Zugelementes entlang der Transportstrecke bewegbar ist.

Dabei kann das Behälterzuführsystem ausserdem einen Antrieb umfassen, welcher derart mit dem Zugelement gekoppelt ist, dass das Zugelement durch den Antrieb bewegbar ist (wodurch auch die Mitnehmer bewegt werden).

Der Antrieb kann dabei eine beliebige Energiequelle aus dem Stand der Technik sein, die dazu geeignet ist, das Zugelement anzutreiben. Der Antrieb kann beispielsweise ein Motor, insbesondere ein Servomotor sein. Das Zugelement kann insbesondere derart am Antrieb angeordnet sein, dass das Zugelement durch den Antrieb bewegt werden kann. Durch die Bewegung des Zugelementes wird auch der Mitnehmer in Bewegung versetzt. Ist das Zugelement ein umlaufendes Zugelement, wie ein umlaufender Zahnflachriemen, umfasst das Behälterzuführsystem bevorzugt den Motor und einen zweiten Motor oder eine Umlenkrolle. Das umlaufende Zugelement wird dann durch den Motor in Bewegung versetzt und läuft über die Umlenkrolle.

Besonders bevorzugt umfasst die Bewegungsvorrichtung jedoch eine Vielzahl von (insbesondere fingerförmigen) Mitnehmern, wobei die Mitnehmer mit dem Zugelement verbunden sind, insbesondere direkt an dem Zugelement befestigt sind. Dabei kann das Zugelement eine Kette, ein Band, ein Seil oder ein Riemen sein. Die Mitnehmer können insbesondere gleichmässig über das Zugelement verteilt sein, sodass eine Vielzahl von Behältern effektiv transportiert werden kann. In allen Ausführungen der Erfindung umfasst ein (einziges) Zugelement bevorzugt eine Vielzahl von Mitnehmern, um einen gleichzeitigen Transport einer Vielzahl von Behältern zu ermöglichen.

Des Weiteren sind Ausführungsbeispiele denkbar, bei denen an dem Transportband Behälterleitvorrichtungen angeordnet sind. Dies können z.B. einfache Transportbanden sein, die parallel zum Zugelement und im Abstand der Breite des Transportbandes angebracht sind und sich entlang der Transportstrecke von der Behälterquelle bis zum Behälterempfänger erstrecken. Durch diese Behälterleitvorrichtungen wird verhindert, dass Behälter während des Betriebs von der Transportstrecke abweichen. Dies könnte etwa in Kurven oder bei schnellen Richtungswechseln des Transportbandes passieren. Besonders bevorzugt sind die erfindungsgemässen Mitnehmer jedoch derart ausgeformt, insbesondere derart gekrümmt, dass die Behälter durch den Mitnehmer in Position gehalten werden und folglich keine entsprechenden Behälterleitvorrichtungen benötigt werden.

Erfindungsgemäss wird weiter eine Verarbeitungsvorrichtung zur Verarbeitung eines Behälters umfassend eine Behälterquelle, einen Behälterempfänger sowie ein erfindungsgemässes Behälterzuführsystem vorgeschlagen, welches zum Transport des Behälters von der Behälterquelle zum Behälterempfänger zwischen der Behälterquelle und dem Behälterempfänger angeordnet ist.

Die Behälterquelle kann ein Behälterspender zum Bereitstellen leerer Behälter sein und / oder der Behälterempfänger in Form einer Füllstation zum Befüllen des Behälters mit einem Füllgut ausgestaltet sein.

Alternativ oder zusätzlich kann die Behälterquelle in Form einer Füllstation zum Befüllen des Behälters mit einem Füllgut ausgestaltet sein und / oder wobei der Behälterempfänger in Form eines Verschliessers zum Verschliessen des Behälters mittels eines Deckels ausgestaltet sein.

Ausserdem wird ein Verschliesser mit einem erfindungsgemässen Behälterzuführsystem zum Zuführen eines Behälters zu einem Arbeitsraum des Verschliessers vorgeschlagen. Dabei kann der Verschliesser weiter eine karussellförmige Station mit einer Vielzahl von Verschliessvorrichtungen umfassen, wobei das Behälterzuführsystem die Behälter, insbesondere mit einem Produkt gefüllten Behälter, zu der Station transportiert und einen Auslauf für (mit dem Deckel) verschlossene Behälter von der Station.

Vorzugsweise umfasst der Verschliesser ausserdem eine Abstapelung für die Deckel, welche durch den Sensor ausgelöst wird und so die Deckel bereitstellt. Nach einem Abstapelprozess, bei welchem die Deckel durch die Abstapelung von einem Stapel einzeln getrennt werden, bringt eine Zufuhreinrichtung wie ein Deckelrotor den Deckel zum Behälter.

Erfindungsgemäss wird weiter Verfahren zum Transport eines Behälters vorgeschlagen. In dem Verfahren wird das erfindungsgemässe Behälterzuführsystem bereitgestellt und der Behälter mittels des Behälterzuführsystems entlang der Transportstrecke transportiert.

In der Praxis kann das Transportieren des Behälters umfassen, dass der Behälter durch die Bewegungsvorrichtung in einem Aufnahmebereich von der Behälterquelle aufgenommen wird und dass der Behälter durch die Bewegungsvorrichtung entlang der Transportstrecke transportiert wird, wobei ein sich entlang der Transportstrecke bewegender Behälter durch den Sensor erkannt wird.

Dabei kann der Behälter von dem Sensor erkannt werden, wobei der Sensor durch das gekoppelte Erkennungssystem das Steuersignal auslöst, welches zum Bereitstellen des Deckels führt.

Erfindungsgemäss wird ausserdem Verfahren zum Verschliessen eines Behälters vorgeschlagen, welches das Bereitstellen des erfindungsgemässen Verschliessers und das Zuführen des Behälters zu dem Arbeitsraum mittels des Behälterzuführsystems umfasst. Ausserdem wird der Behälter im Verfahren durch den Sensor erkannt, wodurch ein Deckel bereitgestellt wird. Anschliessend erfolgt das Verschliessen des Behälters mit einem Deckel in dem Arbeitsraum.

Dabei wird Deckel vorzugsweise mit der Zufuhreinrichtung (z.B. in Form des Deckelrotors mit stationären Schienen) zu dem Behälter transportiert. Anschliessend wird der Deckel auf eine Öffnung des Behälters aufgelegt und der Behälter mit dem Deckel verschlossen.

Das Verschliessen des Behälters kann dabei das Positionieren des Behälters auf einer Hubstation, das Falzen des Deckels an den Behälter mittels wenigstens einer Falzrolle, insbesondere mit zwei Falzrollen, und dem Falzkopf umfassen. Abschliessend kann der verschlossene Behälter aus dem Arbeitsraum des Verschliesser abgeführt werden.

Dabei ist der Arbeitsraum der Raum des Verschliessers, in welchem der Behälter vorzugsweise mit dem Deckel verschlossen wird, insbesondere der Raum, in welchem ein Falzprozess stattfindet. Vorzugsweise wird der Arbeitsraum von einem Gehäuse umgeben und grenzt so den Arbeitsraum des Verschliessers ab (und ermöglicht so das Bilden einer Hygienezone).

Insbesondere kann das Gehäuse eine Verkleidung, Umhüllung, Verschalung als oder Ummantelung angesehen werden, welches den Arbeitsraum zumindest teilweise umgibt. Dabei kann das Gehäuse den Arbeitsraum nach Aussen abschliessen und / oder abschirmen, sodass eine Atmosphäre im Arbeitsraum hygienisch von der Umgebung abgetrennt wird.

Die Verschliessvorrichtung kann einen Verschliesskopf zum Verschliessen des Behälters mit dem Deckel sein. Dabei kann der Verschliesskopf Falzmittel zum Falzen des Deckels an den Behälter umfassen. Die Falzmittel können dabei eine Falzrolle und einen Falzkopf sein. Der beziehungsweise jeder Verschliesskopf kann also mindestens eine Falzrolle (besonders bevorzugt zwei Falzrollen) und einen Falzkopf umfassen. Dabei kann der Verschliesskopf um eine Falzachse rotierbare Falzwellen umfassen, wobei an einem Ende der jeweiligen Falzwelle das Falzmittel angeordnet ist (Falzkopf und Falzrolle sind also insbesondere über jeweilige Falzwellen rotierbar).

Der erfindungsgemässe Verschliesser kann weiter die Hubstation (beziehungsweise eine Vielzahl von Hubstationen) zum Anheben des Behälters umfassen. Die Hubstationen können dabei gegenüber der Verschliessköpfe angeordnet sein.

In der Praxis kann der Verschliesser eine Behälterabführung zum Abführen der Behälter aus dem Arbeitsraum umfassen. Dabei kann zwischen dem Behälterzuführsystem und der Behälterabführung eine Trennwand oder Blende angeordnet sein, welche eine Kreuzkontamination zwischen einlaufenden und auslaufenden Behältern vermeidet.

Ausserdem kann das Behälterzuführsystem als ein im Stand der Technik bekannter Einführtisch ausgestaltet sein, wobei der Sensor gemäss Erfindung angeordnet ist, um die Nachteile des Standes der Technik zu vermeiden.

Der erfindungsgemässe Verschliesser ist bevorzugt als ein Dosenverschliesser ausgestaltet. Der Dosenverschliesser weist üblicherweise die mehreren, karussellförmig angeordneten, gleichartigen Stationen (von vorzugsweise Verschliessköpfen und Hubstationen) auf, in denen jeweils eine Dose mit einem Dosendeckel verschlossen wird.

Dabei kann der Behälter eine Dose und der Deckel ein Dosendeckel sein, welche durch den Dosenverschliesser miteinander gefalzt werden.

Der Dosenverschliesser umfasst zum Verschliessen der Dose bevorzugt mehrere Verschliessköpfe (wie vorangehend beschrieben mit mehreren Falzrollen und einem Falzkopf). Im Betriebszustand werden die Falzrollen mit ihrem jeweiligen Falzprofil in Kontakt mit einem Dosendeckelflansch des Dosendeckels und einem Dosenflansch der Dose gebracht. Durch Rotation der Dose wird dann die Falzrolle in Umfangsrichtung der Dose rotiert, wobei der Dosenflansch mit dem Dosendeckelflansch gefalzt wird. Zur Rotation der Dose wird die Dose bevorzugt zwischen dem Falzkopf und einer Stütze (insbesondere der Hubstation) eingespannt, wobei der Falzkopf mit der Falzwelle um die Falzachse rotiert wird.

In der Praxis umfasst der Dosenverschliesser dabei vorzugsweise wie im Stand der Technik eine Einspannvorrichtung aus Falzkopf und Hubstation, mit welcher die Dose zum Verschliessen in axialer und radialer Richtung fixiert wird und in Umfangsrichtung rotiert werden kann.

Im Rahmen der Erfindung kann unter der Dose ein rotationssymmetrischer Behälter verstanden werden, welcher mittels des Dosenverschliessers und der zugehörigen Falzrolle verschlossen wird. Eine Dose kann vorzugsweise ein Metall, insbesondere Aluminium oder Stahl umfassen.

Prinzipiell kann der Verschliesser bevorzugt mindestens zwei Arten Falzrollen mit vorzugsweise unterschiedlichen Falzprofilen umfassen (wobei der entsprechende Verschliesskopf Falzrollen beider Arten umfasst), sodass Dosen nach einem Doppelfalzprinzip verschlossen werden können, bei welchem die Dosen in der Regel in zwei Stufen verschlossen werden. Je eine Art Falzrolle ist dabei für eine Stufe zuständig. Die erste Art Falzrolle fertigt einen Vorfalz an, während die zweite Art Falzrolle die Dose / das Gebinde komplett verschliesst.

Im erfindungsgemässen Verfahren können Dosendeckel und Dosenkörper vor dem eigentlichen Falzprozess an einem definierten Punkt zusammengeführt werden. Das Zuführen der Dosendeckel erfolgt dabei vorzugsweise durch die Zufuhreinrichtung, auf welcher die Dosendeckel aufliegen. Alternativ kann die Zufuhreinrichtung der Deckelrotor mit den stationären Schienen sein, wobei die Deckel auf den Schienen aufliegen und durch den Deckelrotor zum Behälter bewegt werden.

Die Dosenkörper werden durch die erfindungsgemässe Behälterzuführung zugeführt. Die Dosenkörper gelangen von der Behälterzuführung auf eine der jeweiligen Hubstationen (welche in das Karussell integriert sind). Auf einer Umdrehung der karussellförmigen Station führen die Hubstationen vorzugsweise eine kurvengesteuerte Hubbewegung aus, um die Dosenkörper von unten an die Dosendeckel und später den Falzkopf einzufahren.

Nach einer bestimmten Hubstrecke kommt der Dosenkörper mit dem Dosendeckel in Berührung.

Vorzugsweise umfasst der Dosenverschliesser noch ein Ausstosselement. Das Ausstosselement ist zum Beispiel an einer Ausstossstange befestigt, welche eine Linearbewegung entlang der axialen Richtung innerhalb der Falzwelle des Falzkopfes ausführt. Vorzugsweise kurvengesteuert wird in der Abwärtsbewegung zuerst der Dosendeckel in einer Deckelführung geklemmt. Sobald der Dosenkörper in den Dosendeckel eingefahren ist, wechselt der Ausstosselement die Richtung des Hubs und fährt gleichmässig mit der Hubstation nach oben. Die unterstützende Funktion des Ausstosselements endet mit dem Einfahren von Dosenkörper und Dosendeckel in den Falzkopf. Ab diesem Moment ist die Dose zwischen Hubstation und Falzkopf eingespannt. Anschliessend wird der eigentliche Falzprozess durchgeführt.

Prinzipiell kann der erfindungsgemässe Verschliesser analog zu den bereits aus dem Stand der Technik bekannten Dosenverschliessern sein, unterscheidet sich jedoch in dem Behälterzuführsystem, um so die Nachteile des Standes der Technik zu vermeiden.

Im Folgenden werden die Erfindung und der Stand der Technik anhand von Ausführungsbeispielen unter Bezugnahme auf die Zeichnungen näher erläutert.
- Fig. 1: eine Draufsicht eines Behälterzuführsystems des Standes der Technik;
- Fig. 2: eine Draufsicht eines erfindungsgemässen Dosenverschliessers;
- Fig. 3A: eine Seitenansicht einer ersten Ausführungsform eines erfindungsgemässen Behälterzuführsystems;
- Fig. 3B: eine Seitenansicht einer zweiten Ausführungsform eines erfindungsgemässen Behälterzuführsystems;
- Fig. 3C: eine Seitenansicht einer dritten Ausführungsform eines erfindungsgemässen Behälterzuführsystems;
- Fig. 3D: eine Seitenansicht einer vierten Ausführungsform eines erfindungsgemässen Behälterzuführsystems;
- Fig. 4: eine Draufsicht einer weiteren Ausführungsform eines erfindungsgemässen Behälterzuführsystems.

Fig. 1 wurde bereits vorangehend bei der Darstellung des Standes der Technik beschrieben.

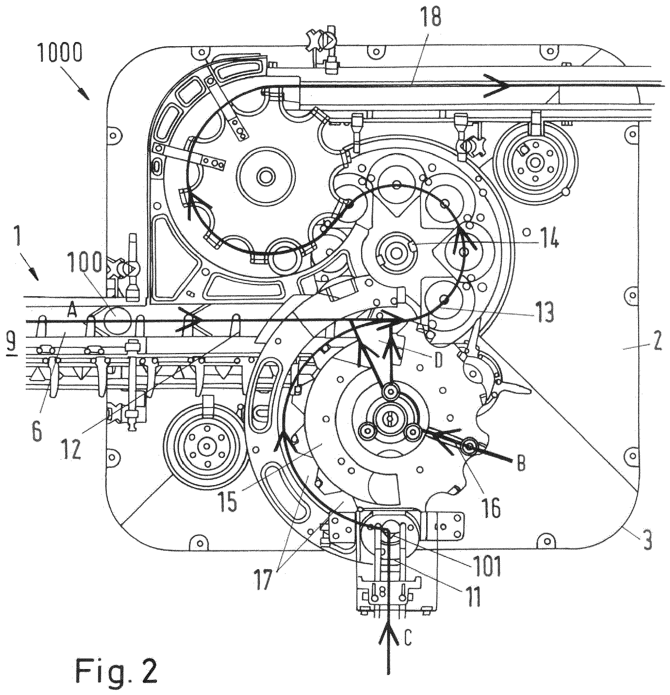

Fig. 2 zeigt eine Draufsicht eines erfindungsgemässen Dosenverschliessers 1000. Prinzipiell läuft der Verschliessprozess analog zum Stand der Technik ab.

Der Dosenverschliesser 1000 gemäss Fig. 2 umfasst eine Deckelbereitstellungsvorrichtung 11 zur Bereitstellung eines Deckels 101, einen Begasungsrotor 15 zur Zuführung von Gas zur Dose 100 und zum Führen und Transportieren des Deckels 101 zu der Dose 100. Ausserdem umfasst der Verschliesser einen Falzprozess / Karussell mit Falzstationen 14 zum Verschliessen der Dose 100 mit dem Deckel 101. Dabei ist der Falzprozess 14 in einem von einem Gehäuse 3 umgebenen Arbeitsraum 2 des Dosenverschliessers 1000 angeordnet.

Der Deckel 101 wird entlang des Pfeiles C durch die Deckelbereitstellungsvorrichtung 11 in den Arbeitsraum 2 des Dosenverschliesser 1000 eingebracht. Hierbei werden die Deckel 101 auf dem Begasungsrotor 15 abgelegt. Durch Rotation des Begasungsrotors 15 werden die Deckel 101 weiter transportiert.

Die Dosen 100 werden durch die an einer Kette angeordneten Mitnehmer 12 des erfindungsgemässen Behälterzuführsystems 1 von einem Behälterspender 9 in Richtung von Pfeil A zum Arbeitsraum 2 geführt. Dort werden die Dosen 100 in die Behälteraufnahmen 17 des Begasungsrotors 15 eingebracht. Dort wird die Dose im Bereich D mit einem Gas wie Kohlenstoffdioxid oder Stickstoff begast und mit dem Deckel 101 vereint. Dass ein Deckel 101 durch die Deckelbereitstellungsvorrichtung 11 bereitgestellt wird, wird durch den (hier nicht dargestellten) Sensor ermöglicht, welcher die in den Arbeitsraum 2 einkommende Dose 100 erkennt.

Die Begasung erfolgt entlang des Pfeiles B mit der Gaszufuhr 16 über den Begasungsrotor 15. Nach der Begasung wird die Dose 100 mit dem Deckel 101 durch die Behälterüberführung 13 vom Begasungsrotor 15 zum Falzprozess 14 weitergeführt und dort verschlossen. Alternativ zum Begasungsrotor 15 kann auch ein Deckelrotor mit Schienen zum Transport der Deckel verwendet werden, wobei die Begasung über eine lineare Begasungsvorrichtung durchgeführt wird, welche stationär angeordnet ist. Die Deckel liegen dann nur auf den Schienen auf und werden durch den Deckelrotor bewegt.

Dabei werden die Dosen 100 mit Deckel 101 eingespannt und durch den Falzprozess 14 verschlossen. Die verschlossene Dose wird durch einen weiteren Rotor in den Dosenausgang 18 gefördert.

Bei der Begasung wird das Gas zu einer Unterseite des Deckels 101 gefördert. Somit kann gewährleistet werden, dass ein Restvolumen der Dose 100, in welchem kein Lebensmittel angeordnet ist, vor dem Verschliessen im Wesentlichen mit dem Gas befüllt ist, wobei die ursprünglich im Restvolumen vorhandene Luft durch das Gas möglichst vollständig verdrängt wird. Hiermit lässt sich gegebenenfalls eine längere Haltbarkeit des in der Dose 100 angeordneten Lebensmittels erreichen.

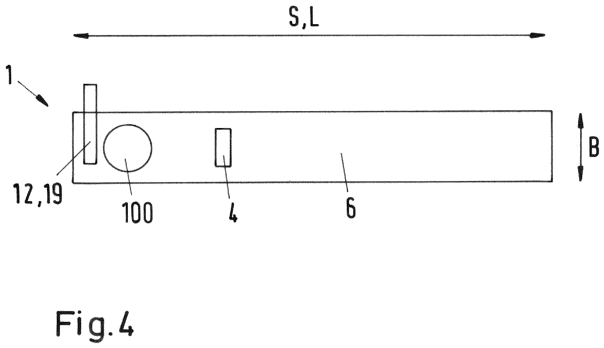

Fig. 4 zeigt eine Draufsicht einer weiteren Ausführungsform eines erfindungsgemässen Behälterzuführsystems 1. Erfindungsgemäss umfasst das Behälterzuführsystem 1 zum Transport eines Behälters 100 entlang einer Transportstrecke S von einer Behälterquelle zu einem Behälterempfänger eine Bewegungsvorrichtung 19 mit Mitnehmer 12 zur Aufnahme und zum Transport des Behälters 100 entlang der Transportstrecke S und ein sich mit seiner Länge L entlang der Transportstrecke S erstreckendes Transportband 6, auf welchem Transportband 6 der Behälter 100 durch die Bewegungsvorrichtung 19 entlang der Transportstrecke S bewegbar ist. Zur Erkennung des Behälters 100 umfasst das Behälterzuführsystem 1 ausserdem einen an dem Transportband 6 angeordneten Sensor 4.

Hierbei erstreckt sich der Sensor 4 derart über eine senkrecht zu der Länge L des Transportbandes 6 verlaufenden Breite B des Transportbandes 6 (also nicht über die gesamte Breite B, sondern nur teilweise / abschnittsweise über die Breite B des Transportbandes 6), dass der sich entlang der Transportstrecke S bewegende Behälter 100 erkannt werden kann.

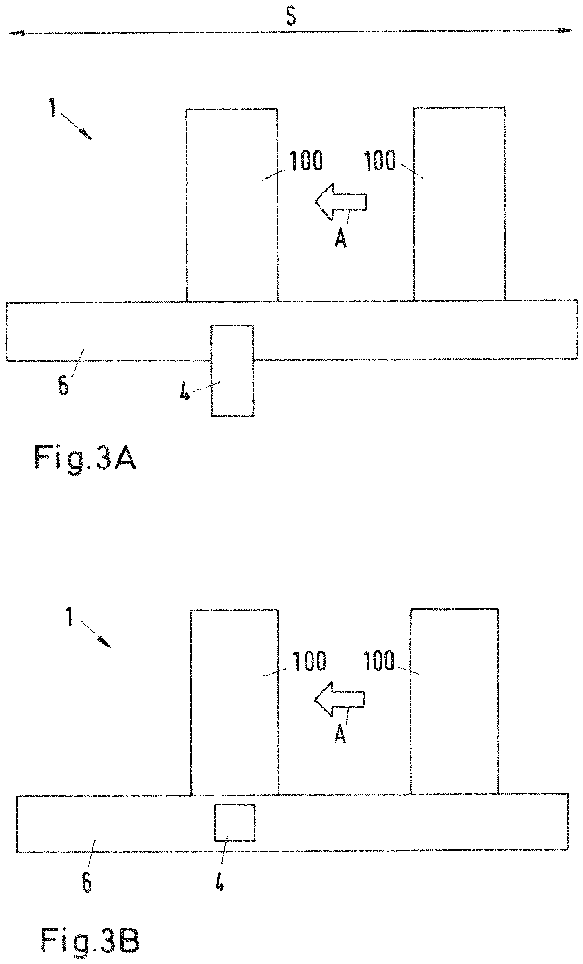

Fig. 3A zeigt eine Seitenansicht einer ersten Ausführungsform eines erfindungsgemässen Behälterzuführsystems 1, bei welchem die Behälter 100 gleitend über das als Gleitband 6 ausgestaltete Transportband 6 in Richtung A entlang der Transportstrecke S bewegt werden.

Anstelle eines seitlichen Erkennungssystems wird ein Erkennungssystem mit einem Sensor 4 verwendet, welcher sich unterhalb des Gleitbandes 6 befindet, also unterhalb des Gleitbandes angeordnet ist. Um den Abstand zur Dose 100 zu reduzieren und eine Erkennung zu gewährleisten, ist das Gleitband 6 so modifiziert, dass sich der Sensor 4 nah an der Dose 100 befindet, indem er in einer Aussparung des Gleitbandes 6 angeordnet ist.

Ausserdem ist der Sensor 4 als induktiver Sensor 4 ausgestaltet.

Der Sensor 4 (also seine Positionierung) muss bei einer Änderung des Behälterdurchmessers nicht mehr angepasst werden. Ausserdem ist der Sensor 4 weniger anfällig für Verschmutzungen und Reinigungsmedien, da er teilweise im Gleitband 6 integriert ist und sich unterhalb des Gleitbandes 6 befindet. Zudem muss keine seitliche Befestigung mehr vorgesehen werden.

Fig. 3B zeigt eine Seitenansicht einer zweiten Ausführungsform eines erfindungsgemässen Behälterzuführsystems 1. Prinzipiell ist das System analog zum System gemäss Fig. 3A ausgestaltet, jedoch ist der Sensor 4 im Gleitband 6 angeordnet.

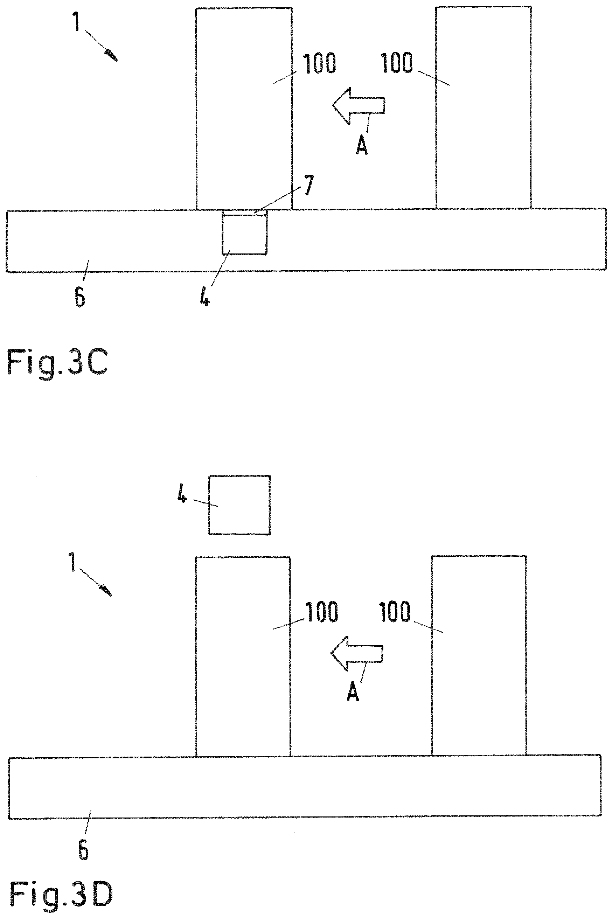

Fig. 3C zeigt eine Seitenansicht einer dritten Ausführungsform eines erfindungsgemässen Behälterzuführsystems 1. Dabei ist der Sensor 4 im Gegensatz zu der Ausführung gemäss Fig. 3A im Gleitband 6 angeordnet und als optischer Sensor 4 ausgestaltet.

Dabei ist über dem Sensor 4 ein optisches transparentes Fenster 7 vorgesehen, durch welches der Sensor 4 die sich über den Sensor 4 bewegenden Behälter erkennen kann.

Alternativ kann der Sensor 4 auch ohne Fenster 7 vorgesehen werden. Jedoch kann der Sensor 4 dann leichter durch sich über den Sensor 4 bewegende Behälter 100 beschädigt werden.

Fig. 3D zeigt eine Seitenansicht einer vierten Ausführungsform eines erfindungsgemässen Behälterzuführsystems 1. Im Gegensatz zu den Ausführungen gemäss Fig. 3A-C ist der Sensor 4 jedoch über dem Transportband 6 angeordnet, sodass sich die Behälter 100 zwischen Transportband 6 und Sensor 4 bewegen und nicht über den Sensor 4 bewegt werden.

In dieser Ausführung kann das Transportband 6 als Förderband 6 ausgestaltet sein.

Das Behälterzuführsystem 1 transportiert die Behälter 100 vorzugsweise von einer Behälterquelle in Form eines Füllers zu einem Behälterempfänger in Form eines Verschliesser.

Da der Sensor 4 nicht seitlich neben dem Transportband 6 angeordnet ist, sondern sich entlang der Breite des Transportbandes 6 erstreckt, muss der Sensor 4 bei einem Formatwechsel zu einem anderen Behälterdurchmesser seine Position nicht ändern, da ein Abstand zu dem sich vorbeibewegenden Behälter 100 bei jedem Behälterdurchmesser gleich ist.

Bevorzugt ist der Sensor 4 bezogen auf die Breite B des Transportbandes 6 mittig beziehungsweis in der Mitte des Transportbandes 6 angeordnet sein.

Der Sensor 4 ist ausserdem Teil des nicht dargestellten Erkennungssystems, sodass ein Signal, welches durch den sich am Sensor 4 vorbeibewegenden Behälter 100 ausgelöst wird, in ein Steuersignal umgewandelt werden kann, welches die Deckelzufuhr in Form der Deckelbereitstellungsvorrichtung 11 steuert und ein Bereitstellen des Deckels 101 ermöglicht.

Die Erfindung ist nicht auf die offenbarten Ausführungsformen beschränkt. Andere Variationen der offenbarten Ausführungsformen können von Fachleuten beim Praktizieren einer beanspruchten Erfindung aus einem Studium der Zeichnungen, der Offenbarung und der abhängigen Ansprüche verstanden und bewirkt werden. In den Ansprüchen schliesst das Wort "umfassend" keine anderen Elemente oder Schritte aus, und der unbestimmte Artikel "ein" oder "eine" schliesst keine Vielzahl aus. Die blosse Tatsache, dass bestimmte Massnahmen in voneinander verschiedenen abhängigen Ansprüchen wiederholt werden, bedeutet nicht, dass eine Kombination dieser Massnahmen nicht vorteilhaft verwendet werden kann. Jegliche Bezugszeichen in den Ansprüchen sollten nicht als Einschränkung des Umfangs ausgelegt werden.

## Patentansprüche

1. Behälterzuführsystem zum Transport eines Behälters (100) entlang einer Transportstrecke (S) von einer Behälterquelle (9) zu einem Behälterempfänger (1000), umfassend
eine Bewegungsvorrichtung (19) zur Aufnahme und zum Transport des Behälters (100) entlang der Transportstrecke (S); und
ein sich mit seiner Länge (L) entlang der Transportstrecke (S) erstreckendes Transportband (6), auf welchem Transportband (6) der Behälter (100) durch die Bewegungsvorrichtung (19) entlang der Transportstrecke (S) bewegbar ist; und
einen zur Erkennung des Behälters (100) an dem Transportband (6) angeordneten Sensor (4),
**dadurch gekennzeichnet, dass**
sich der Sensor (4) derart entlang einer senkrecht zu der Länge (L) des Transportbandes (6) verlaufenden Breite (B) des Transportbandes (6) erstreckt, dass der sich entlang der Transportstrecke (6) bewegende Behälter (100) durch den Sensor (4) erkennbar ist.

2. Behälterzuführsystem nach Anspruch 1, wobei der Sensor (4) in, unter oder über dem Transportband (6) angeordnet ist.

3. Behälterzuführsystem nach einem der vorangehenden Ansprüche, wobei der Sensor (4) ein induktiver Sensor (4) ist.

4. Behälterzuführsystem nach einem der vorangehenden Ansprüche, wobei das Transportband (6) ein Förderband (6) ist, sodass der Behälter (100) durch eine Bewegung des Förderbandes (6) entlang der Transportstrecke (S) bewegbar ist.

5. Behälterzuführsystem nach einem der vorangehenden Ansprüche, wobei das Transportband (6) ein Gleitband (6) ist, sodass der Behälter (100) gleitend über eine Gleitfläche des Gleitbandes (6) entlang der Transportstrecke (S) bewegbar ist.

6. Behälterzuführsystem nach einem der vorangehenden Ansprüche, wobei die Bewegungsvorrichtung (19) einen Mitnehmer (12) zur Aufnahme und zum Transport des Behälters (100) sowie ein Zugelement umfasst, welches derart mit dem Mitnehmer (12) verbunden ist, dass der Mitnehmer (12) durch eine Bewegung des Zugelementes entlang der Transportstrecke (S) bewegbar ist.

7. Behälterzuführsystem nach Anspruch 6 umfassend einen Antrieb, welcher derart mit dem Zugelement gekoppelt ist, dass das Zugelement durch den Antrieb bewegbar ist.

8. Behälterzuführsystem nach Anspruch 6 oder 7, wobei die Bewegungsvorrichtung (19) eine Vielzahl von Mitnehmern (12) umfasst, und die Mitnehmer (12) mit dem Zugelement verbunden sind, insbesondere die Mitnehmer (12) direkt an dem Zugelement befestigt sind.

9. Behälterzuführsystem nach einem der Ansprüche 6 bis 8, wobei das Zugelement eine Kette, ein Band, ein Seil oder ein Riemen ist.

10. Verarbeitungsvorrichtung zur Verarbeitung eines Behälters (100) umfassend eine Behälterquelle (9), einen Behälterempfänger (1000), sowie ein Behälterzuführsystem (1) nach einem der vorangehenden Ansprüche, welches zum Transport des Behälters (100) von der Behälterquelle (9) zum Behälterempfänger (1000) zwischen der Behälterquelle (9) und dem Behälterempfänger (1000) angeordnet ist.

11. Verarbeitungsvorrichtung nach Anspruch 10, wobei die Behälterquelle (9) ein Behälterspender zum Bereitstellen leerer Behälter ist und / oder der Behälterempfänger in Form einer Füllstation zum Befüllen des Behälters mit einem Füllgut ausgestaltet ist.

12. Verarbeitungsvorrichtung nach Anspruch 10, wobei die Behälterquelle (9) in Form einer Füllstation (9) zum Befüllen des Behälters mit einem Füllgut ausgestaltet ist und / oder wobei der Behälterempfänger (1000) in Form eines Verschliessers (1000) zum Verschliessen des Behälters (100) mittels eines Deckels (101) ausgestaltet ist.

13. Verfahren zum Transport von Behältern (100), umfassend:
Bereitstellen eines Behälterzuführsystem (1) nach einem der Ansprüche 1 bis 9, und
Transportieren des Behälters (100) mittels des Behälterzuführsystems (1) entlang der Transportstrecke (S).

14. Verfahren nach Anspruch 13, wobei das Transportieren des Behälters (100) umfasst:
Aufnehmen des Behälters (100) durch die Bewegungsvorrichtung (19) in einem Aufnahmebereich von der Behälterquelle (9),
Transportieren des Behälters (100) durch die Bewegungsvorrichtung (19) entlang der Transportstrecke (S), wobei der sich entlang der Transportstrecke (S) bewegende Behälter (100) durch den Sensor (4) erkannt wird.

15. Verschliesser umfassend ein Behälterzuführsystem (1) nach einem der Ansprüche 1 bis 9 zum Zuführen eines Behälters (100) zu einem Arbeitsraum (2) des Verschliessers (1000).

16. Verfahren zum Verschliessen eines Behälters (100) umfassend Bereitstellen eines Verschliessers (1000) nach Anspruch 15; und Zuführen eines Behälters (100) zu dem Arbeitsraum (2) mittels des Behälterzuführsystems (1); und
Erkennen des Behälters (100); sowie
Verschliessen des Behälters (100) mit einem Deckel (101) in dem Arbeitsraum (2).
